# EUROPÄISCHE PATENTSCHRIFT

(11) **EP 1 620 767 B1**
(45) Veröffentlichungstag und Bekanntmachung des Hinweises auf die Patenterteilung: **01.07.2009**
(21) Anmeldenummer: 04731626.0
(22) Anmeldetag: 07.05.2004
(51) Int. Cl.: G05B 19/042, H02P 21/00

(54) **VERFAHREN ZUR MODERNISIERUNG EINER TECHNISCHEN ANLAGE SOWIE DAFÜR GEEIGNETE ANTRIEBSVORRICHTUNG**
METHOD FOR MODERNISING A TECHNICAL SYSTEM AND AN APPROPRIATE DRIVE ELEMENT
PROCEDE POUR MODERNISER UNE INSTALLATION TECHNIQUE ET ELEMENT D'ENTRAINEMENT ADAPTE A CET EFFET

(30) Priorität: 08.05.2003 DE 10320826
(43) Veröffentlichungstag der Anmeldung: 01.02.2006
(73) Patentinhaber: SIEMENS AKTIENGESELLSCHAFT, 80333 München (DE)
(72) Erfinder: HAAKS, Stefan, 91052 Erlangen (DE); MICHAELIS, Gerd, 91096 Möhrendorf (DE); WEGNER, Christian-Marius, 91522 Ansbach (DE)
(86) Internationale Anmeldenummer: PCT/EP2004/004911
(87) Internationale Veröffentlichungsnummer: WO 2004/099887

(56) Entgegenhaltungen:
- EP-A- 0 523 601
- DE-C- 19 727 824
- ZIMMER D ET AL: "#3 paper machine drive upgrade a drive upgrade done during machine washups" CONFERENCE RECORD OF THE 2001 ANNUAL PULP AND PAPER INDUSTRY TECHNICALCONFERENCE. PORTLAND, OR, JUNE 18 - 22, 2001, ANNUAL PULP & PAPER CONFERENCE, NEW YORK, NY : IEEE, US, 18. Juni 2001 (2001-06-18), Seiten 75-80, XP010558688 ISBN: 0-7803-6745-6
- ROCKWELL AUTOMATION: "Rockwell Automation's drives upgrade 'on the run' at an Australian paper mill saves US$2.8 million in installation costs"[Online] Nr. PULIVP-AP002A-EN-D, 28. Februar 2003 (2003-02-28), XP002289862 Gefunden im Internet: URL:http://domino.automation.rockwell.com/ applications/css_artilce.nsf/0/b7588b3f5fb 2c06286256d7a0069f374/$FILE/AustraliaNorsk eSkogForestProducts.pdf> [gefunden am 2004-07-23]
- ABB: "Technical Guide No.1-Direct Torque Control"[Online] 26. April 2002 (2002-04-26), XP002289863 Gefunden im Internet: URL:http://library.abb.com/GLOBAL/SCOT/sco t201.nsf/VerityDisplay/299C5D307CB78A34C12 56D28003FED0C/$File/ABB_Technical_Guide_1_ %20EN26042002.pdf> [gefunden am 2004-07-23]

## Beschreibung

Die Erfindung betrifft ein Verfahren zur Modernisierung einer technischen Anlage, insbesondere einer Produktionsanlage, gemäß Oberbegriff des Patentanspruchs 1 sowie eine dafür geeignete Antriebsvorrichtung gemäß Patentanspruch 14.

Viele technische Anlagen, insbesondere Produktionsanlagen für die Herstellung durchlaufender Warenbahnen (z.B. Papier, Textil, Kunststoff-Folien, Metall-Folien), weisen eine nicht mehr zeitgemäße Antriebstechnik z.B. auf Basis von Analogtechnik auf. Diese veraltete Technik hat oft gravierende Nachteile, denn sie weist z.B. eine erhöhte Störanfälligkeit durch Alterung und äußere Einflüsse, eine unzureichende Wiederholgenauigkeit und nur eingeschränkte Diagnosemöglichkeiten auf. Die Folge sind eine unzureichende Anlagenverfügbarkeit, hohe Ausschußquoten und hohe Ausfallkosten.

Um diese Probleme zu vermeiden und die Produktivität der Anlage zu erhöhen, kann eine Modernisierung der Anlage durchgeführt werden, indem die z.B. in veralteter Analogtechnik ausgeführten Antriebs- und Automatisierungssysteme durch moderne Systeme in Digitaltechnik ersetzt werden. Da das für einen solchen Umbau vorhandene Budget allerdings meist nicht für einen kompletten Umbau der Anlage ausreicht, wird die Anlage in mehrere Teilabschnitte unterteilt, die dann Zug um Zug modernisiert werden. Ein jeder dieser Teilabschnitte, z.B. eine Mehrmotoreneinheit mitsamt den die Motoren speisenden Leistungsteilen (z.B. Gleichrichter, Um- oder Wechselrichter), Antriebsregelung und evtl. übergeordneter Automatisierung kann dann entsprechend des vorhandenen Budgets separat geplant und modernisiert werden.

Allerdings ist eine solche Modernisierung insgesamt mit einem hohem Aufwand verbunden, da für einen Umbauschritt in der Regel sowohl in den neuen, modernisierten als auch in den bereits bestehenden Anlagenteilen, insbesondere in der bestehenden Automatisierungsebene, Anpassungen erforderlich werden, damit neue und alte Anlagenteile miteinander kommunizieren können. Des Weiteren ist es bei diesem Vorgehen nicht möglich, ein produktivitätserhöhendes, zeitgemäßes Antriebs- und Automatisierungskonzept zu realisieren, solange noch ein alter Anlagenteil vorhanden ist. Eine Konzeptumstellung im letzten Schritt, d.h. bei Umbau des letzten Anlagenteils, ist ebenfalls mit vertretbarem Aufwand oft nicht mehr zu realisieren. Folglich sind alle herkömmlichen Lösungsansätze sowohl technisch als auch betriebswirtschaftlich nicht optimal. Viele Anlagenbetreiber nehmen deshalb lieber die Nachteile der vorhandenen Anlage in Kauf verzichten auf eine Modernisierung der kompletten Anlage.

Aus der EP 0 523 601 A1 ist ein Verfahren zur Modernisierung einer Aufzugsanlage für eine Gruppe von Aufzügen bekannt, wobei die Aufzugsanlage eine übergeordnete Gruppensteuerung sowie für jeden der Aufzüge jeweils eine gesonderte Aufzugssteuerung für einen motorischen Antrieb des Aufzuges umfasst. Zur Modernisierung wird in einem ersten Schritt die übergeordnete Gruppensteuerung modernisiert, wobei die Ankopplung an die einzelnen bisherigen Aufzugssteuerungen über jeweils einen Aufzugscomputer sowie eine passive I/O Adaptereinheit erfolgt. In weiteren Schritten können dann die einzelnen Steuerfunktionen der bisherigen Aufzugssteuerungen, wie z.B. die Steuerung des motorischen Antriebs, sowie der motorische Antrieb selbst modernisiert werden.

Aus der DE 197 27 824 C1 ist ein Antriebssystem bekannt, bei dem ein Leitsystem einem Antriebsmaster einen Geschwindigkeits-Sollwert vorgibt, der daraus wiederum einen DrehzahlSollwert für mehrere Antriebsregelgeräte eines Mehrmotorensystems erzeugt. Die Antriebsregelung besteht im Wesentlichen aus einer Gleichlauf- und einem Momenenten-/Stromregelung, wobei eine Gleichlaufregelung antriebstechnisch als eine Drehzahlregelung mit überlagerter Winkelregelung definiert wird.

Aus dem Aufsatz "#3 PAPER MACHINE DRIVE UPGRADE - A Drive Upgrade Done During Machine Washups", Zimmer D. et al, CONFERENCE RECORD OF THE 2001 ANNUAL PULP AND PAPER INDUSTRY TECHNICALCONFERENCE, PORTLAND, OR, June 18-22, 2001, ANNUAL PULP & PAPER CONFERENCE, NEW YORK, NY: IEEE. US, 18. Juni 2001 (2001-06-18), Seiten 75-80, XP010558688 ISBN; 0-7803-6745-6 ist ein Verfahren zur Modernisierung einer Papiermaschine bekannt, bei dem alte Antriebsregelungen durch neue digitale Antriebsregelungen ersetzt werden, wobei die alten Leistungsteile und Motoren jedoch beibehalten werden.

Weiterhin ist aus dem Aufsatz ROCKWELL AUTOMATION; "Rockwell Automation's drives upgrade 'on the run' at an Australian paper mill saves US$2.8 million in installation costs" [Online] Nr. PULIVP-AP002A-EN-D, 28. Februar 2003 (2003-02-28), XP002289862, eine Modernisierung einer Papieraufwickelmaschine bekannt, bei der alte analoge Antriebsregelungen durch neue digitale Antriebsregelungen ersetzt werden, wobei die alten Leistungsteile und Motoren jedoch beibehalten werden.

Antriebsvorrichtungen mit einem von einem Leistungsteil gespeisten Antriebsmotor, einem den Leistungsteil regelnden Momentenregler und einem dem Momentenregler einen MomentenSollwert vorgebenden Drehzahlregler sind grundsätzlich aus der Firmenschrift ABB: "Technical Guide No.1-Direct Torque Control"[Online] 26. April 2002 (2002-04-26), XP002289863 bekannt.

Ausgehend hiervon ist es Aufgabe vorliegender Erfindung, ein Verfahren und eine dafür geeignete Antriebsvorrichtung anzugeben, die eine unter betriebswirtschaftlichen Gesichtspunkten günstige und unter technischen Gesichtspunkten vorteilhafte Modernisierung einer technischen Anlage erlauben.

Erfindungsgemäß wird diese Aufgabe gelöst durch ein Verfahren gemäß Patentanspruch 1; eine dafür geeignete Antriebsvorrichtung ist Gegenstand des Patentanspruchs 14. Eine Produktionsanlage mit einer derartigen Antriebsvorrichtung ist Gegentand des Patentanspruchs 17, Vorteilhafte Ausgestaltungen des Verfahrens gemäß Patentanspruch 1 sind Gegenstand der Unteransprüche 2 bis 13; vorteilhafte Ausgestaltungen der Antriebsvorrichtung gemäß Patentanspruch 14 sind Gegenstand der Unteransprüche 15 bis 16.

Die Erfindung geht von der Überlegung aus, dass eine betriebswirtschaftlich und technisch günstige Modernisierung der technischen Anlage dadurch möglich ist, dass statt der herkömmlichen "vertikalen" Segmentierung der Anlage in mehrere Teilabschnitte und deren schrittweiser Modernisierung, d.h. z.B. dem Austausch einer kompletten Antriebsvorrichtung mitsamt dem kostenintensiven Leistungsteil und der Motoren, ein "horizontaler" Schnitt auf Ebene des Momentensollwerts der einzelnen Antriebe durchgeführt wird. Bei dieser Schnittstelle handelt es sich im Regelfall um eine Standardschnittstelle, und es ist meist ohne große Probleme möglich, den Momentensollwert statt durch den bisherigen Drehzahlregler des Antriebsmotors durch einen anderen, neuen Drehzahlregler vorgeben zu lassen.

Erfindungsgemäß befindet sich dieser Drehzahlregler in einer Standard-Antriebskomponente, die neben dem Drehzahlregler noch einen Momentenregler und einen Leistungsteil aufweist. Solche Standard-Antriebskomponenten sind in verschiedensten Leistungsklassen erhältlich und aufgrund ihrer standardisierten Bauweise in hohen Stückzahl kostengünstig herstellbar und auch zu beschaffen. Zugleich ermöglichen moderne Standard-Antriebskomponenten die Anbindung der Antriebsvorrichtung an ein modernes, übergeordnetes Automatisierungssystem, welches technologischen Funktionen wie z.B. Maschinensteuerung, Sollwertführung, technologische Regelungen usw. mit den zugehörigen Bedien- und Beobachtungsfunktionen (HMI - Human Machine Interface) zur Verfügung stellt und somit eine die gewünschten Produktivitätsverbesserungen, Verfügbarkeiten etc. ermöglichen. Die kostenintensiven Antriebsbauteile wie der Leistungsteil und der Motor werden zu diesem Zeitpunkt noch nicht durch neue Komponenten ersetzt, so dass der Umbau mit relativ geringen Kosten durchgeführt werden kann. Aufgrund der Preisgünstigkeit der Standard-Antriebs-komponenten fällt es nicht besonders ins Gewicht, dass der in ihnen enthaltene Momentenregler und Leistungsteil vorerst nicht benötigt werden, insbesondere wenn Leistungsteile einer sehr kleinen Leistungsklasse vorgesehen werden.

Die Antriebsregelungs- und die Automatisierungsebene der Anlage kann somit in einem einzigen Umbauschritt, in dem alle für die Produktion wesentlichen Bestandteile erneuert werden, kostengünstig auf einen technischen und technologischen Stand gebracht werden, der dem einer modernen, neuen Anlage entspricht. Durch den horizontalen Schnitt auf Ebene des Momentensollwertes entstehen keine komplexen Schnittstellen zwischen neuen und alten Anlagenteilen. Somit kann der Aufwand für Schnittstellenanpassungen klein gehalten und technisch wenig komplexe, den funktionalen Anforderungen moderner Systeme gerechte und somit unter technischen Gesichtspunkten vorteilhafte Lösungen implementiert werden.

Bei Durchführung dieses Verfahrens für alle in der bestehenden Anlage vorliegenden Antriebsvorrichtungen kann ein entsprechend modernes Automatisierungssystem für die gesamte Anlage vorgesehen und somit ein neues Regelungs- und Bedienkonzept mit allen Vorteilen der modernen Technik für die gesamte Anlage realisiert werden, d.h. es findet kein aus technischer Sicht mit Einschränkungen verbundener Parallelbetrieb verschiedener Konzepte, z.B. Parallelbetrieb eines Automatisierungssystems mit analoger und eines Automatisierungssystems mit moderner, digitaler Technik statt.

Während die alte Technik häufig durch eine Vielzahl unterschiedlichster Baugruppen mit entsprechend großer Ersatzteilbevorratung gekennzeichnet war, reduziert sich die Ersatzteilbevorratung nach dem Umbau auf die wenigen in den verbleibenden Leistungsteilen und Motoren verbleibenden Elemente.

Gemäß einer vorteilhaften Ausgestaltung der Erfindung ist vorgesehen, dass der Drehzahlregler der Standard-Antriebskomponente zumindest einen Drehzahlsollwert von einem Automatisierungssystem erhält und somit in eine Anlagenautomatisierung eingebunden ist. Neben dem Drehzahlsollwert kann die Standard-Antriebskomponente darüberhinaus auch Ein- und Ausschaltbefehle von dem übergeordneten Automatisierungssystem empfangen und Störungs- und Diagnosemeldungen an das Automatisierungssystem rückmelden.

Eine weitergehende Modernisierung der Anlage, insbesondere wenn das Leistungsteil der Standard-Antriebskomponente für die Leistung oder Technik des Antriebsmotors nicht geeignet ist, ist dadurch möglich, dass in einem nachfolgenden Schritt der Leistungsteil des Antriebsmotors durch einen weiteren, an die Leistung und Technik des Antriebsmotors angepassten Leistungsteil ersetzt wird, wobei der weitere Leistungsteil an den Momentenregler der Standard-Antriebskomponente angepasst ist und von diesem geregelt wird, und wobei der Momentenregler der Standard-Antriebskomponente einen Momentensollwert von dem Drehzahlregler der Standard-Antriebskomponente erhält. Der bisher bestehende (alte) Momentenregler und Leistungsteil wird dann nicht mehr benötigt.

Der nachfolgende Schritt kann hierbei insbesondere dann kostengünstig gestaltet werden, wenn das weitere Leistungsteil an die Standard-Antriebskomponente angepasst ist und den Leistungsteil der Standard-Antriebskomponente in der Standard-Antriebskomponente ersetzt.

Gemäß einer alternativen Ausgestaltung der Erfindung ist vorgesehen, dass in dem nachfolgenden Schritt der weitere Leistungsteil Teil einer weiteren Standard-Antriebskomponente ist. Auch auf diesem Weg ist es möglich, kostengünstig den bisherigen (alten) Leistungsteil durch einen an die Leistung des Antriebsmotors angepassten modernen, neuen Leistungsteil zu ersetzen.

Ein großer Aufwand für die Parametrierung der Antriebsregelung kann hierbei dadurch vermieden werden, daß die weitere Standard-Antriebskomponente an den Drehzahlregler und den Momentenregler der Standard-Antriebskomponente angepasst ist, und der Drehzahlregler und der Momentenregler aus der Standard-Antriebskomponente entfernt und in die weitere Standard-Antriebskomponente integriert werden. Der bereits vorhandene und für die Regelung parametrierte Drehzahlregler bzw. Momentenregler kann damit weiterverwendet werden und eine erneute Parametrierung der Regelung weitestgehend vermieden werden. Der bisher benutze (moderne) Leistungsteil und der verbleibende Teil der Standard- Antriebskomponente werden nicht mehr weiter benötigt.

Falls die weitere Standard- Antriebskomponente ebenfalls einen Drehzahlregler und einen Momentenregler aufweist, kann Parametrierungsaufwand auch dann vermieden werden, wenn die Parametrierungssoftware des Drehzahlreglers und Momentenreglers der Standard-Antriebskomponente in die entsprechenden Komponenten der weiteren Standard- Antriebskomponente geladen werden kann.

Gemäß einer weiteren, alternativen Ausgestaltung der Erfindung ist vorgesehen, dass in einem nachfolgenden Schritt der Momentenregler des Antriebsmotors ersetzt wird durch einen weiteren Momentenregler und der Leistungsteil ersetzt wird durch einen weiteren Leistungsteil, wobei der weitere Momentenregler einen Momentensollwert von dem Drehzahlregler der Standard-Antriebskomponente erhält.

Die Erfindung sowie weitere vorteilhafte Ausgestaltungen der Erfindung gemäß Merkmalen der Unteransprüche werden im folgenden anhand von Ausführungsbeispielen in vereinfachter und prizipieller Darstellung in den Zeichnungen näher erläutert; darin zeigen:
- FIG 1: eine bisherige (alte) Antriebsvorrichtung einer technischen Anlage,
- FIG 2: eine Standard-Antriebskomponente,
- FIG 3: eine Antriebsvorrichtung mit einer Standard-Antriebskomponente gemäß FIG 2,
- FIG 4: die Antriebsvorrichtung von FIG 3 mit einer Speisung des Antriebsmotors aus einem in der Standard-Antriebskomponente angeordneten, weiteren Leistungsteils,
- FIG 5: die Antriebsvorrichtung von FIG 3 mit einer Speisung des Antriebsmotors aus einem in einer weiteren Standard-Antriebskomponente angeordneten Leistungsteil,
- FIG 6: die Antriebsvorrichtung von FIG 3 mit einer Speisung des Antriebsmotors aus einem weiteren, durch einen weiteren Momentenregler geregelten, Leistungsteil, und
- FIG 7: mehrere in ein Automatisierungssystem einer technischen Anlage eingebundene Antriebsvorrichtungen

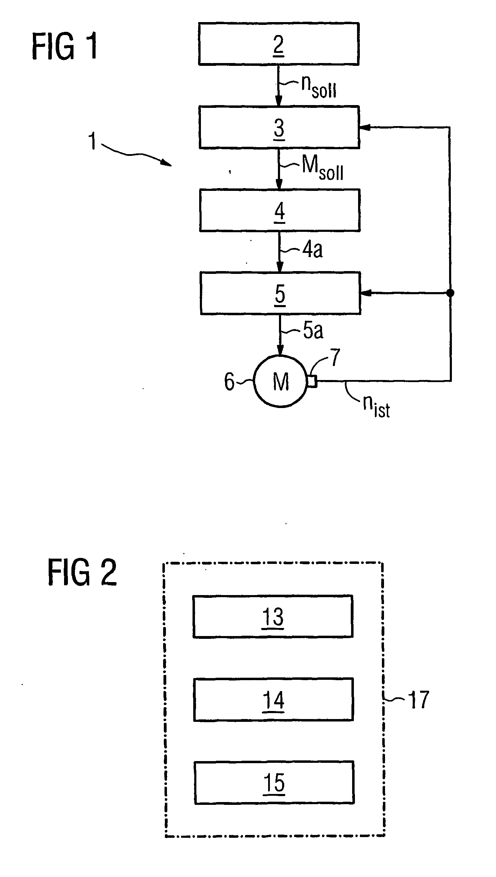

FIG 1 zeigt eine bisherige (alte) Antriebsvorrichtung 1 einer technischen Anlage, z.B. einer Produktionsanlage zur Papierherstellung. Die Antriebsvorrichtung 1 weist einen Antriebsmotor 6, einen den Motor 6 über eine Speiseverbindung 5a speisenden Leistungsteil 5, eine den Leistungsteil 5 über eine Regelverbindung 4a regelnden Momentenregler 4 und einen Drehzahlregler 3 auf, der dem Momentenregler 4 einen Momentensollwert Msoll bezüglich des Motormomentes vorgibt. Ein für die Regelung benötigter Drehzahlistwert nᵢₛₜ wird von einem Drehzahlgeber 7 am Motor 6 erfasst und dem Drehzahlregler 3 und dem Leistungsteil 5 zur Verfügung gestellt. Der Antriebsvorrichtung 1 ist eine (alte) Antriebsautomatisierung 2 übergeordnet, die einen Drehzahlsollwert nsoll an den Drehzahlregler 3 vorgibt. Sowohl die Antriebsvorrichtung 1 als auch die übergeordnete Automatisierung 2 sind im wesentlichen in Analogtechnik oder in veralteter Digitaltechnik ausgeführt und auch der Antriebsmotor 6 ist in veralteter Gleichstromtechnik ausgeführt, so dass die Erfordernisse hinsichtlich Produktivität, Verfügbarkeit und Herstellungsqualität der Anlage nicht mehr erfüllt werden.

FIG 2 zeigt eine im Rahmen der Erfindung bei der Modernisierung zum Einsatz kommende, moderne Standard-Antriebskomponente 17, die zumindest einen Drehzahlregler 13, einen Momentenregler 14 und einen Leistungsteil 15 aufweist. Solche Standard-Antriebskomponenten sind in verschiedensten Leistungsklassen bezüglich des Leistungsteils z.B. unter dem Produktnamen SIMOVERT MASTERDRIVE von der Anmelderin erhältlich. Durch die Verwendung standardisierter Komponenten, insbesondere auch standardisierter Drehzahlregler, Momentenregler und Leistungsteile, in diesen Komponenten, sind diese kostengünstig herstellbar und beschaffbar. Die Standard-Antriebs-komponente ist in Digitaltechnik ausgeführt, vorteilhafterweise nach dem neuesten Stand der Technik.

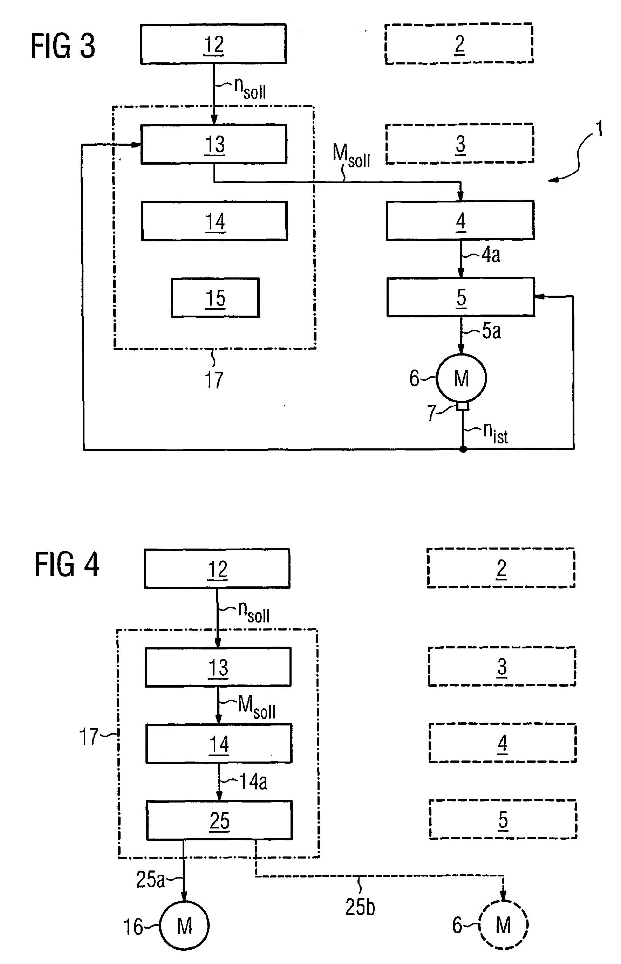

Zur Modernisierung der Anlage wird gemäß FIG 3 die Vorgabe des Momentensollwertes Mₛₒₗₗ für den Momentenregler 4 durch den Drehzahlregler 3 deaktiviert und eine Standard-Antriebskomponente 17 gemäß FIG 2 bereitgestellt. Die Vorgabe des Momentensollwertes Mₛₒₗₗ für den Momentenregler 4 des Antriebsmotors 6 erfolgt dann durch den Drehzahlregler 13 der Standard-Antriebskomponente 17. Die Antriebsvorrichtung 1 weist somit einen von dem Leistungsteil 5 gespeisten Antriebsmotor 6 und einen den Leistungsteil 5 regelnden Momentenregler 4 auf, wobei ein Ausgang des Drehzahlreglers 13 der Standard-Antriebskomponente 17 mit einem Eingang des Momentenreglers 4 des Leistungsteils 5 des Antriebsmotors 6 zur Zuführung des Momentensollwertes Mₛₒₗₗ gekoppelt ist. Der Momentenregler 14 und der Leistungsteil 15 der Standard-Antriebskomponente 17 werden nicht benötigt; der Leistungsteil 15 kann deshalb bezüglich seiner Ausgangsleistung sehr klein dimensioniert sein. Die Standard-Antriebskomponente 17 ist vorteilhafterweise mit einem Automatisierungssystem 12 zur Zuführung zumindest eines Drehzahlsollwertes (Mₛₒₗₗ) gekoppelt ist und wird von dieser gesteuert und überwacht. Die Kopplung erfolgt vorteilhafterweise durch ein Bussystem, insbesondere einen Profibus.

Der Drehzahlregler 13 der Standard-Antriebskomponente 17 erhält von dem Automatisierungssystem 12 einen Drehzahlsollwert und ggfs. noch weitere Ein- und Ausschaltbefehle. Umgekehrt meldet die Standard-Antriebskomponente 17 Störungsmeldungen, Diagnosedaten etc. an das Automatisierungssystem 12 zurück (nicht dargestellt). Der bisher verwendete (alte) Momentenregler 4, Leistungsteil 5 und Antriebsmotor 6 werden weiterhin verwendet. Ihre Modernisierung kann zu einem späteren Zeitpunkt ohne großen Aufwand erfolgen.

Falls sämtliche Antriebsvorrichtungen der Anlage entsprechend der Antriebsvorrichtung 1 gemäß FIG 3 modernisiert werden, kann in der Anlage das bisherige alte Automatisierungssystem vollständig durch eine neues, modernes Automatisierungssystem ersetzt werden, wobei die Anbindung sämtlicher Antriebsvorrichtungen an das neue Automatisierungssystem möglich ist. Da auf die Modernisierung der kostenintensiven Leistungsteile und Antriebsmotoren vorerst verzichtet wird, und nicht zuletzt durch die Verwendung kostengünstiger Standard-Antriebskomponenten, ist eine kostengünstige Modernisierung der Anlage möglich.

Gemäß FIG 4 kann in einem nächsten Schritt zur weiteren Modernisierung der Anlage der Leistungsteil 5 des bisherigen (alten) Antriebsmotors 6 durch einen weiteren Leistungsteil 25 ersetzt werden, wobei der weitere Leistungsteil 25 an den Momentenregler 14 der Standard-Antriebkomponente 17 angepasst und von diesem über eine Regelverbindung 14a geregelt wird. Der weitere Leistungsteil 25 ist hierbei an die Standard-Antriebskomponente 17 angepasst und ersetzt den bisherigen Leistungsteil 15 der Standard-Antriebskomponente 17 in der Standard-Antriebskomponente 17. Der Leistungsteil 15 der Standard-Antriebskomponente 17 ist hinsichtlich seiner Ausgangsleistung kleiner dimensioniert als der weitere Leistungsteil 25, so dass dessen Autausch unter Kostengesichtspunkten nicht besonders ins Gewicht fällt. Der Momentenregler 14 erhält hierbei einen Momentensollwert Msoll von dem Drehzahlregler 13 der Standard-Antriebskomponente 17. Der bisherige (alte) Momentenregler 4 und der bisherige (alte) Leistungsteil 5 werden somit nicht mehr benötigt. Zusätzlich kann auch der Antriebsmotor 6 durch einen modernen Antriebsmotor 16, z.B. einen wartungsarmen Asynchronmotor ersetzt und von dem Leistungsteil 25 über Speiseleitungen 25a mit Strom gespeist werden. Aufgrund des engen Zusammenspiels zwischen Antriebsmotor und Leistungsteil bietet sich eine gleichzeitige Modernisierung dieser beiden Komponenten an. Die Speisung des modernisierten Antriebsmotors 16 erfolgt dann über die Speiseverbindung 25b. Der Leistungsteil 25 ist sowohl hinsichtlich seiner Ausgangsleistung als auch seiner Technik an den jeweilig mit Strom zu speisenden Antriebsmotor 6 bzw. 16 angepasst.

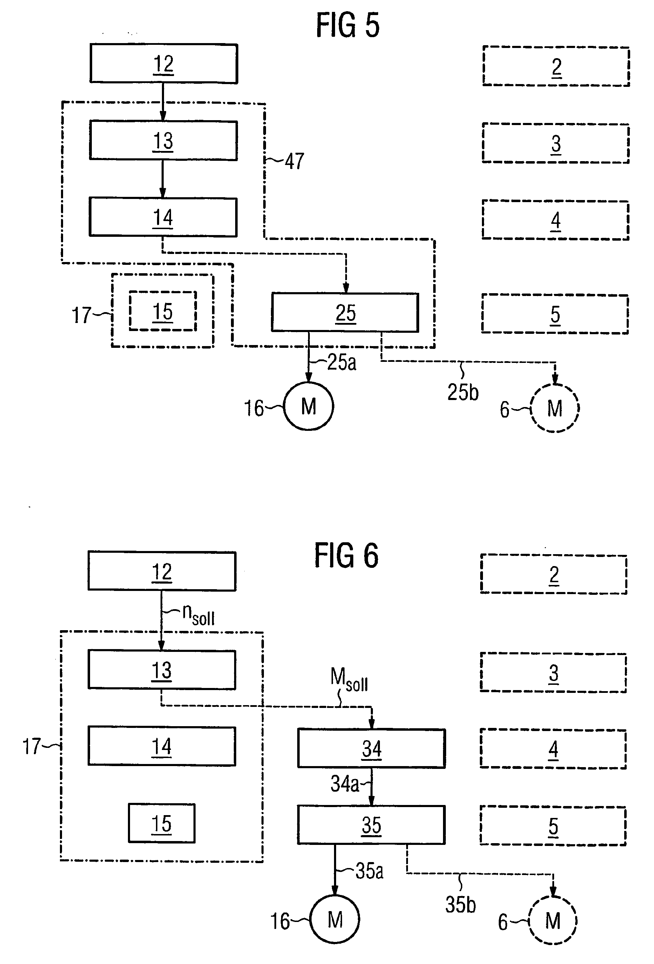

Alternativ kann gemäß FIG 5 der weitere Leistungsteil 25 auch Teil einer weiteren Standard-Antriebskomponente 47 sein. Die weitere Standard-Antriebskomponente 47 ist hierbei an den Drehzahlregler 13 und Momentenregler 14 der Standard-Antriebskomponente 17 angepasst. Der Drehzahlregler 13 und Momentenregler 14 sind aus der Standard-Antriebskomponente 17 entfernt und in die weitere Standard-Antriebskomponente 47 integriert. Die bisherige Standard-Antriebskomponente 17 mit dem klein dimensionierten Leistungsteil 15 wird dann nicht mehr benötigt. Auch hier bietet sich ein gleichzeitiger Ersatz des Antriebsmotors 6 durch einen modernen Antriebsmotor 16 an.

FIG 6 zeigt eine weitere Alternative für die in einem nachfoglenden Schritt erfolgende Modernisierung des kosteninsiven Leistungsteils 5 und/oder Motors 6 der Antriebsvorrichtung 1. Hierbei ist in dem nachfolgenden Schritt der Momentenregler 4 des Antriebsmotors 6 ersetzt durch einen weiteren, modernen Momentenregler 34 und der Leistungsteil 5 des Antriebsmotors ersetzt durch einen weiteren, modernen Leistungsteil 35. Der weitere Momentenregler 34 erhält hierbei einen Momentensollwert Msoll von dem Drehzahlregler 13 der Standard-Antriebskomponente 17 und regelt über eine Regelverbindung 34a den Lesitungsteil 35, welcher wiederum über eine Speiseverbindung 35a den alten Antriebsmotor 6 bzw. über eine Speisverbindung 35b den modernen Antriebsmotor 16 mit Strom speist. Der alte Momentenregler 4 und der alte Leistungsteil 5 der Antriebsvorrichtung 1 werden dann nicht mehr benötigt, gleiches gilt für den Momentenregler 14 und den Leistungsteil 15 der Standard-Antriebskomponente 17. Der Leistungsteil 35 ist sowohl hinsichtlich seiner Ausgangsleistung als auch seiner Technik an den jeweilig mit Strom zu speisenden Antriebsmotor 6 bzw. 16 angepasst.

Auch wenn nicht explizit dargestellt und beschrieben, erhält bei allen vorstehend beschriebenen Antriebsvorrichtungen der den Antriebsmotor speisende Leistungsteil und der den Momentensollwert Msoll vorgegebende Drehzahlregler einen DrehzahlIstwert nist von einem oder mehreren am Antriebsmotor 6 bzw. 16 angeordneten Drehzahlgeber(n).

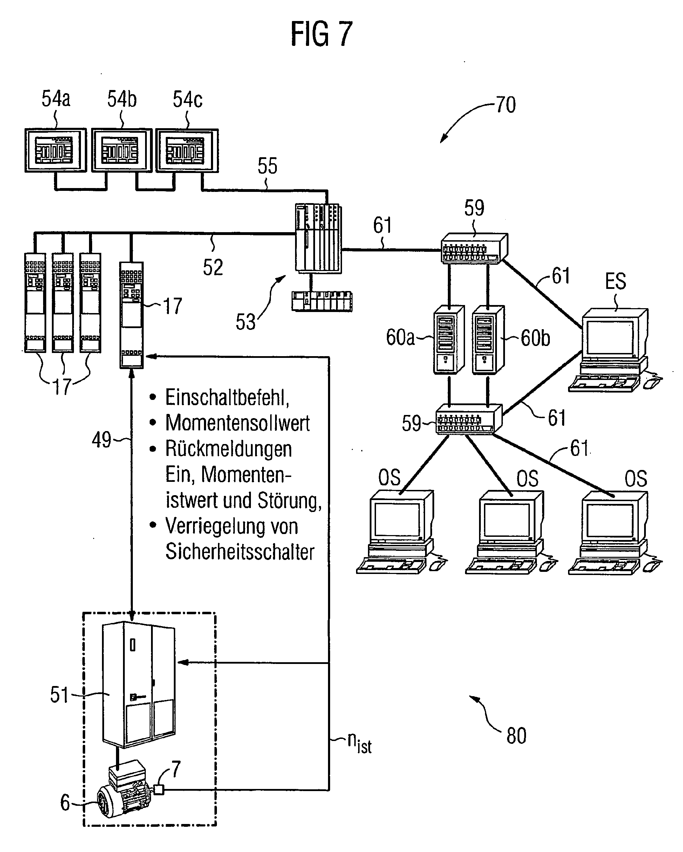

Anhand von FIG 7 soll die Einbindung mehrerer Antriebsvorrichtungen 1 gemäß FIG 3 in ein Automatisierungssystem 70 einer Anlage 80 verdeutlicht werden. Die Anlage 80 weist mehrere Antriebsvorrichtungen 1 auf, wobei nur eine davon dargestellt ist. Der in alter Technik ausgeführte Leistungsteil und Momentenregler der Antriebsvorrichtung 1 ist in einem Antriebsmodul 51 untergebracht. Dem Antriebmodul 51 vorgeschaltet ist eine moderne Standard-Antriebskomponente 17, wobei der zugehörige Drehzahlregler, Momentenregler und Leistungsteil nicht dargestellt sind. Über eine Kommunikationsverbindung 49 empfängt der Momentenregler des Antriebsmoduls 51 einen Momentensollwert vom Drehzahlregler der Standard-Antriebskomponente 17. Zusätzlich erhält das Antriebsmodul 51 weitere Befehle, z.B. Ein-und Ausschaltbefehle, von dem Automatisierungssystem 70. Umgekehrt meldet das Antriebsmodul 51 den Momentenistwert sowie weitere Störungsdaten an die der Standard-Antriebskomponente 17. Über den Drehzahlgeber (Encoder) 7 erhalten sowohl das Antriebsmodul 51 als auch die Standard-Antriebskomponente 17 einen Drehzahlistwert nist des Antriebsmotors 6.

Jeder der Standard-Antriebskomponenten 17 ist jeweils zumindest ein Antriebsmodul 51 mit einem oder mehreren Antriebsmotoren 6 zugeordnet. Die Standard-Antriebskomponenten 17 stehen über einen Kommunikationsbus, insbesondere einen Profibus, mit einem zentralen Automatisierungssteuergerät 53 in Verbindung. Über einen weiteren Kommunikationsbus 55 kommunizieren Bedienpanele (HMI-Interfaces) 54a-c mit dem zentralen Automatisierungssteuergerät 53 und ermöglichen eine "vor-Ort"-Bedienung und Beobachtung der Anlage 80. Weiterhin sind mehrere Operator-Stationen OS zur Fernbedienung der Anlage von einer Warte sowie eine Engineering-Station ES zur Parametrierung der Antriebe und der HMI-Interfaces vorgesehen, die über Kommunikationsverbindungen 61, insbesondere Industrial Ethernet-Verbindungen, und über Switch-Module 59 miteinander und mit dem Automatisierungsgerät 53 in Kommunikation stehen. In den Servern 60a und 60b erfolgt eine Speicherung von Daten aus den laufenden Prozessen. Aus Redundanzgründen erfolgt die Speicherung der Daten sowohl in dem Server 60a als auch in dem Server 60b.

## Patentansprüche

1. Verfahren zur Modernisierung einer technischen Anlage (80), insbesondere einer Produktionsanlage, wobei die technische Anlage (80) zumindest eine Antriebsvorrichtung (1) mit zumindest einem von einem Leistungsteil (5) gespeisten Antriebsmotor (6), einen den Leitungsteil (5) regelnden Momentenregler (4) und einen dem Momentenregler (4) einen Momentensollwert (Mₛₒₗₗ) vorgebenden Drehzahlregler (3) aufweist,
**dadurch gekennzeichnet, dass**
- die Vorgabe des Momentensollwertes (Mₛₒₗₗ) für den Momentenregler (4) durch den Drehzahlregler (3) deaktiviert wird,
- eine zumindest einen Drehzahlregler (13), einen Momentenregler (14) und einen Leistungsteil (15) umfassende Standard-Antriebskomponente (17) bereitgestellt wird,
- die Vorgabe des Momentensollwertes (Mₛₒₗₗ) für den Momentenregler (4) des Antriebsmotors (6) durch den Drehzahlregler (13) der Standard-Antriebskomponente (17) erfolgt.

2. Verfahren nach Anspruch 1
**dadurch gekennzeichnet, dass** der Drehzahlregler (13) der Standard-Antriebskomponente (17) zumindest einen Drehzahlsollwert (nₛₒₗₗ) von einem Automatisierungasystem (12) erhält.

3. Verfahren nach einem der vorhergehenden Ansprüche
**dadurch gekennzeichnet, dass** der Drehzahlregler (13) der Standard-Antriebskomponente (17) einen Drehzahlistwert (nᵢₛₜ) von einem Drehzahlgeber des Antriebsmotors (6) erhält.

4. Verfahren nach einem der Ansprüche 1 bis 3
**dadurch gekennzeichnet, dass** in einem nachfolgenden Schritt der Leistungsteil (5) des Antriebsmotors (6) durch einen weiteren Leistungsteil (25,35) ersetzt wird, wobei der weitere Leistungsteil an den Momentenregler (14) der Standard- Antriebskomponente (17) angepasst ist und von diesem geregelt wird, und wobei der Momentenregler (14) der Standard- Antriebskomponente (17) einen Momentensollwert (Mₛₒₗₗ) von dem Drehzahlregler (13) der Standard-Antriebskomponente (17) erhält.

5. Verfahren nach Anspruch 4
**dadurch gekennzeichnet, dass** der weitere Leistungsteil (25)
an die Standard-Antriebskomponente (17) angepasst ist und den Leistungsteil (15) der Standard-Antriebskomponente (17) in der Standard-Antriebskomponente (17) ersetzt.

6. Verfahren nach Anspruch 4
**dadurch gekennzeichnet, dass** der weitere Leistungsteil (25) Teil einer weiteren Standard-Antriebskomponente (47) ist.

7. Verfahren nach Anspruch 6
**dadurch gekennzeichnet, dass** die weitere Standard-Antriebskomponente (47) an den Drehzahlregler (13) und den Momentenregler (14) der Standard-Antriebskomponente (17) angepasst ist, und der Drehzahlregler (13) und der Momentenregler (14) aus der Standard- Antriebskomponente (17) entfernt und in die weitere Standard-Antriebskomponente (47) integriert werden.

8. Verfahren nach Anspruch 6
**dadurch gekennzeichnet, dass** die weitere Standard-Antriebskomponente (47) einen Drehzahlregler und einen Momentenregler aufweist, wobei eine Parametrierungssoftware des Drehzahlgebers bzw. Momentenreglers der Standard-Antriebskomponente (17) in den Drehzahlregler bzw. Momentenregler der weiteren Standard-Antriebskomponente (47) geladen werden kann.

9. Verfahren nach einem der Ansprüche 1 bis 3
**dadurch gekennzeichnet, dass** in einem nachfolgenden Schritt der Momentenregler (4) des Antriebsmotors (6) ersetzt wird durch einen weiteren Momentenregler (34) und der Leistungsteil (5) des Antriebsmotors (6) ersetzt wird durch einen weiteren Leistungsteil (35), und wobei der weitere Momentenregler (34) einen Momentensollwert (Mₛₒₗₗ) von dem Drehzahlregler (13) der Standard-Antriebskomponente (17) erhält.

10. Verfahren nach einem der Ansprüche 4 bis 9
**dadurch gekennzeichnet, dass** der Leistungsteil (15) der Standard-Antriebskomponente (17) hinsichtlich seiner Ausgangsleistung kleiner dimensioniert ist als der weitere Leistungsteil (25,35).

11. Verfahren nach einem der vorhergehenden Ansprüche
**dadurch gekennzeichnet, dass** der Antriebsmotor (6) durch einen weiteren Antriebsmotor (16) ersetzt wird.

12. Verfahren nach einem der vorhergehenden Ansprüche
**dadurch gekennzeichnet, dass** die Standard-Antriebskomponente(n) (17,47) in Digitaltechnik ausgeführt ist.

13. Verfahren nach einem der vorhergehenden Ansprüche
**dadurch gekennzeichnet, dass** die Standard-Antriebskomponente(n) (17,47) nach dem neuesten Stand der Technik ausgeführt ist.

14. Modernisierte Antriebsvorrichtung (1) mit zumindest einem Leistungsteil (5) gespeisten Antriebsmotor (6), einem den Leistungsteil (5) regelnden Momentenregler (4) und einer Standard-Antriebskomponente (17), die zumindest einen Drehzahlregler (13), einen Momentenregler (14) und einen Leistungsteil (15) umfasst, wobei ein Ausgang des Drehzahlreglers (13) der Standard-Antriebskomponente (17) mit einem Eingang des Momentenreglers (4) des Leistungsteils (5) des Antriebsmotors (6) zur Zuführung eines Momentensollwertes (Mₛₒₗₗ) gekoppelt ist, wobei der Leistungsteil (5) und der Momentenregler (4) Teile einer alten Antriebsvorrichtung sind, die weiter einen Drehzahlregler umfasst, und wobei die Standard-Artriebskomponente (17) ein neuer Anlagenteil ist.

15. Antriebsvorrichtung (1) nach Anspruch 14
**dadurch gekennzeichnet, dass** die Standard-Antriebskomponente (17) mit einem Automatisierungssystem (12, 70) zur Zuführung zumindest eines Drehzahlsollwertes (nₛₒₗₗ) gekoppelt ist und von dieser gesteuert und überwacht wird.

16. Antriebsvorrichtung (1) nach Anspruch 15
**dadurch gekennzeichnet, dass** die Kopplung durch ein Bussystem (52), insbesondere einen Profibus, erfolgt.

17. Produktionsanlage (80), insbesondere der Papier- und Zellstoffindustrie, mit zumindest einer Antriebsvorrichtung (1) nach einem der Ansprüche 14 bis 16.

## Claims

1. Method for modernizing a technical system (80), especially of a production system, with the technical system (80) featuring at least one drive element (1) with at least one drive motor (6) supplied by a power element (5), a torque controller (4) controlling the power element (5) and a speed controller (3) specifying a nominal torque value (Mₙₒₘ) to the torque controller (4),
**characterized in that**
- the specification of the required torque value (Mₙₒₘ) for the torque controller (4) is deactivated by the speed controller (3),
- a standard drive component (17) including at least one speed controller (13), a torque controller (14) and a power element (15) is provided,
- the nominal torque value (Mₙₒₘ) for the torque controller (4) of the drive motor (6) is specified by the speed controller (13) of the standard drive component (17).

2. Method in accordance with claim 1
**characterized in that** the speed controller (13) of the standard drive component (17) receives at least one nominal speed value (nₙₒₘ) from an automation system (12).

3. Method in accordance with one of the previous claims,
**characterized in that** the speed controller (13) of the standard drive component (17) receives an actual speed value (n_{act}) from an encoder of the drive motor (6).

4. Method in accordance with one of the claims 1 to 3,
**characterized in that,** in a subsequent step the power element (5) of the drive motor (6) is replaced by a further power element (25,35), with the further power element being adapted to the torque controller (14) of the standard drive component (17) and being controlled by this, and with the torque controller (14) of the standard drive component (17) receiving a required torque value (Mₙₒₘ) from the speed controller (13) of the standard drive component (17).

5. Method in accordance with claim 4,
**characterized in that** the further power element (25) is adapted to the standard drive component (17) and replaces the power element (15) of the standard drive component (17) in the standard drive component (17).

6. Method in accordance with claim 4,
**characterized in that** the further power element (25) is part of a further standard drive component (47).

7. Method in accordance with claim 6,
**characterized in that** the further standard drive component (47) is adapted to the speed controller (13) and the torque controller (14) of the standard drive component (17), and the speed controller (13) and the torque controller (14) are removed from the standard drive component (17) and integrated into the further standard drive component (47).

8. Method in accordance with claim 6,
**characterized in that** the further standard drive component (47) features a speed controller and a torque controller, with parameter setting software of the encoder or torque controller of the standard drive component (17) being able to be loaded into the speed controller or the torque controller of the further standard drive component (47).

9. Method in accordance with one of the claims 1 to 3,
**characterized in that,** in a subsequent step the torque controller (4) of the drive motor (6) is replaced by a further torque controller (34) and the power element (5) of the drive motor (6) is replaced by a further power element (35) and with the further torque controller (34) receiving a nominal torque value (Mₙₒₘ) from the speed controller (13) of the standard drive component (17).

10. Method in accordance with one of the claims 4 to 9,
**characterized in that** the power element (15) of the standard drive component (17) is dimensioned smaller as regards its output power than the further power element (25,35).

11. Method in accordance with one of the previous claims,
**characterized in that** the drive motor (6) is replaced by a further drive motor (16).

12. Method in accordance with one of the previous claims,
**characterized in that** the standard drive component(s) (17,47) is (are) embodied in digital technology.

13. Method in accordance with one of the previous claims,
**characterized in that** the standard drive component(s) (17,47) is embodied in accordance with the latest prior art.

14. Modernised drive element (1) with at least one drive motor (6) supplied with power by a power element (5), a torque controller (4) controlling the power element (5) and a standard drive component (17) which includes at least one speed controller (13), a torque controller (14) and a power element (15), with one output of the speed controller (13) of the standard drive component (17) being connected to an input of the torque controller (4) of the power element (5) of the drive motor (6) for supplying a nominal torque value (Mₙₒₘ), with the power element (5) and the torque controller (4) being parts of a former drive element, which also includes a speed controller, and with the standard drive component (17) being a new system part.

15. Drive element (1) in accordance with claim 14
**characterized in that** the standard drive component (17) is linked to an automation system (12, 70) for supplying at least one nominal speed value (nₙₒₘ) and is controlled and monitored by this system.

16. Drive element (1) in accordance with claim 15,
**characterized in that** the connection is undertaken by a field bus system (52), especially a Profibus.

17. Production system (80), especially of the paper and pulp industry, with at least one drive element (1) in accordance with one of the claims 14 to 16.

## Revendications

1. Procédé de modernisation d'une installation ( 80 ) technique, notamment d'une installation de production, dans lequel l'installation ( 80 ) technique a au moins un dispositif ( 1 ) d'entraînement ayant au moins un moteur ( 6 ) d'entraînement alimenté par une partie ( 5 ) de puissance, un régulateur ( 4 ) de couple régulant la partie ( 5 ) de puissance et un régulateur ( 3 ) de vitesse de rotation prescrivant une valeur ( Mₛₒₗₗ ) de consigne de couple au régulateur ( 4 ) de couple, **caractérisé en ce que**
- la prescription de la valeur ( Mₛₒₗₗ ) de consigne de couple pour le régulateur ( 4 ) de couple est désactivée par le régulateur ( 3 ) de vitesse de rotation,
- on dispose d'un composant ( 17 ) d'entraînement standard, comprenant au moins un régulateur ( 13 ) de vitesse de rotation, un régulateur ( 14 ) de couple et une partie ( 15 ) de puissance,
- on effectue la prescription de la valeur ( Mₛₒₗₗ ) de consigne de couple pour le régulateur ( 4 ) de couple du moteur ( 6 ) d'entraînement par le régulateur ( 13 ) de vitesse de rotation du composant ( 17 ) d'entraînement standard.

2. Procédé suivant la revendication 1, **caractérisé en ce que** le régulateur ( 13 ) de vitesse de rotation du composant ( 17 ) d'entraînement standard reçoit au moins une valeur ( nₛₒₗₗ ) de consigne de vitesse de rotation d'un système ( 12 ) d'automatisation.

3. Procédé suivant l'une des revendications précédentes, **caractérisé en ce que** le régulateur ( 13 ) de vitesse de rotation du composant ( 17 ) d'entraînement standard reçoit une valeur ( nᵢₛₜ ) réelle de vitesse de rotation d'un indicateur de vitesse de rotation du moteur ( 6 ) d'entraînement.

4. Procédé suivant l'une des revendications 1 à 3, **caractérisé en ce que,** dans un stade suivant, on remplace la partie ( 5 ) de puissance du moteur ( 6 ) d'entraînement par une autre partie ( 25, 35 ) de puissance, l'autre partie de puissance étant adaptée au régulateur ( 14 ) de couple du composant ( 17 ) d'entraînement standard et étant régulée par celui-ci et dans lequel le régulateur ( 14 ) de couple du composant ( 17 ) d'entraînement standard reçoit une valeur ( nₛₒₗₗ ) de consigne de couple du régulateur ( 13 ) de vitesse de rotation du composant ( 17 ) d'entraînement standard.

5. Procédé suivant la revendication 4, **caractérisé en ce que** l'autre partie ( 25 ) de puissance est adaptée au composant ( 17 ) d'entraînement standard et remplace la partie ( 15 ) de puissance du composant ( 17 ) d'entraînement standard dans le composant ( 17 ) d'entraînement standard.

6. Procédé suivant la revendication 4, **caractérisé en ce que** l'autre partie ( 25 ) de puissance fait partie d'un autre composant ( 47 ) d'entraînement standard.

7. Procédé suivant la revendication 6, **caractérisé en ce que** l'autre composant ( 47 ) d'entraînement standard est adapté au régulateur ( 13 ) de vitesse de rotation et au régulateur ( 14 ) de couple du composant ( 17 ) d'entraînement standard et le régulateur ( 13 ) de vitesse de rotation et le régulateur ( 14 ) de couple sont loins du composant ( 17 ) d'entraînement standard et sont intégrés dans l'autre composant ( 47 ) d'entraînement standard.

8. Procédé suivant la revendication 6, **caractérisé en ce que** l'autre composant ( 47 ) d'entraînement standard a un régulateur de vitesse de rotation et un régulateur de couple, un logiciel de paramétrage de l'indicateur de vitesse de rotation du régulateur de couple du composant ( 17 ) d'entraînement standard pouvant être chargé dans le régulateur de vitesse de rotation ou le régulateur de couple de l'autre composant ( 47 ) d'entraînement standard.

9. Procédé suivant l'une des revendications 1 à 3, **caractérisé en ce que,** dans un stade suivant, on remplace le régulateur ( 4 ) de couple du moteur ( 6 ) d'entraînement par un autre régulateur ( 34 ) de couple et on remplace la partie ( 5 ) de puissance du moteur ( 6 ) d'entraînement par une autre partie ( 35 ) de puissance, l'autre régulateur ( 34 ) de couple recevant une valeur ( Mₛₒₗₗ ) de consigne de couple du régulateur ( 13 ) de vitesse de rotation du composant ( 17 ) d'entraînement standard.

10. Procédé suivant l'une des revendications 4 à 9, **caractérisé en ce que** la partie ( 15 ) de puissance du composant ( 17 ) d'entraînement standard, a, du point de vue de sa puissance de sortie, une dimension plus petite que l'autre partie ( 25, 35 ) de puissance.

11. Procédé suivant l'une des revendications précédentes, **caractérisé en ce que** l'on remplace le moteur ( 6 ) d'entraînement par un autre moteur ( 16 ) d'entraînement.

12. Procédé suivant l'une des revendications précédentes, **caractérisé en ce que** l'on réalise le ou les composants ( 17, 47 ) d'entraînement standard en technique numérique.

13. Procédé suivant l'une des revendications précédentes, **caractérisé en ce que** l'on réalise le ou les composants ( 17, 47 ) d'entraînement standard suivant l'état de la technique le plus nouveau.

14. Dispositif ( 1 ) d'entraînement modernisé ayant au moins un moteur ( 6 ) d'entraînement alimenté par une partie ( 5 ) de puissance, un régulateur ( 4 ) de couple régulant la partie ( 5 ) de puissance et un composant ( 17 ) d'entraînement standard qui comprend au moins un régulateur ( 13 ) de vitesse de rotation, un régulateur ( 14 ) de couple et une partie ( 15 ) de puissance, une sortie du régulateur ( 13 ) de vitesse de rotation du composant ( 17 ) d'entraînement standard étant couplée à une entrée du régulateur ( 4 ) de couple de la partie ( 5 ) de puissance du moteur ( 6 ) d'entraînement pour l'envoi d'une valeur ( Mₛₒₗₗ ) de consigne de couple, la partie ( 5 ) de puissance et le régulateur ( 4 ) de couple faisant partie d'un ancien dispositif d'entraînement qui comprend, en outre, un régulateur de vitesse de rotation et le composant ( 17 ) d'entraînement standard étant une partie nouvelle de l'installation.

15. Dispositif ( 1 ) d'entraînement suivant la revendication 14, **caractérisé en ce que** le composant ( 17 ) d'entraînement standard est couplé à un système ( 12, 70 ) d'automatisation pour l'envoi d'au moins une valeur ( nₛₒₗₗ ) de consigne de vitesse de rotation et est commandé et surveillé par ce système.

16. Dispositif ( 1 ) d'entraînement suivant la revendication 15, **caractérisé en ce que** le couplage s'effectue par un système ( 52 ) de bus, notamment un profibus.

17. Installation ( 80 ) de production, notamment dans de l'industrie du papier et de la cellulose, comprenant au moins un dispositif ( 1 ) d'entraînement suivant l'une des revendications 14 à 16.
